# EUROPÄISCHE PATENTSCHRIFT

(11) **EP 2 288 514 B1**
(45) Veröffentlichungstag und Bekanntmachung des Hinweises auf die Patenterteilung: **06.11.2013**
(21) Anmeldenummer: 09761426.7
(22) Anmeldetag: 04.06.2009
(51) Int. Cl.: B60N 2/42, B62D 1/19, B60R 21/01, B60W 30/08, B60W 30/085, B60R 21/0134, B60N 2/427, B60N 2/06, B60G 17/0195

(54) **VORRICHTUNG ZUR ANSTEUERUNG WENIGSTENS EINES FÜHRERHAUSSTELLGLIEDS UND/ODER WENIGSTENS EINES SITZSTELLGLIEDS UND/ODER WENIGSTENS EINES LENKSÄULENSTELLGLIEDS EINES NUTZFAHRZEUGS**
DEVICE FOR ACTUATING AT LEAST ONE DRIVER' S CAB ACTUATOR ELEMENT AND/OR AT LEAST ONE SEAT ACTUATOR ELEMENT AND/OR AT LEAST ONE STEERING COLUMN ACTUATOR ELEMENT OF A UTILITY VEHICLE
DISPOSITIF DE COMMANDE D'AU MOINS UN ORGANE DE RÉGLAGE DE CABINE ET/OU D'AU MOINS UN ORGANE DE RÉGLAGE DE SIÈGE ET/OU D'AU MOINS UN ORGANE DE RÉGLAGE DE COLONNE DE DIRECTION D'UN VÉHICULE UTILITAIRE

(30) Priorität: 13.06.2008 DE 102008028266
(43) Veröffentlichungstag der Anmeldung: 02.03.2011
(73) Patentinhaber: Knorr-Bremse Systeme für Nutzfahrzeuge GmbH, 80809 München (DE)
(72) Erfinder: HILBERER, Eduard, 68766 Hockenheim (DE); MILLER, Bernhard, 71263 Weil der Stadt (DE); HERGES, Michael, 80935 München (DE)
(74) Vertreter: Schönmann, Kurt
(86) Internationale Anmeldenummer: PCT/EP2009/003996
(87) Internationale Veröffentlichungsnummer: WO 2009/149863

(56) Entgegenhaltungen:
- EP-A- 1 431 159
- EP-A- 1 609 664
- WO-A-2005/085012
- DE-A1- 10 038 362
- DE-A1- 19 909 432
- US-B1- 6 182 783
- US-B1- 6 224 131

## Beschreibung

Die Erfindung betrifft ein Nutzfahrzeug mit einer Vorrichtung zur Ansteuerung wenigstens eines Führerhausstellglieds gemäß dem Oberbegriff von Anspruch 1 sowie mit einer Vorrichtung zur Ansteuerung eines Sitzstellglieds gemäß dem Oberbegriff des nebengeordneten Anspruchs 6.

Ein Nutzfahrzeug mit einer Vorrichtung zur Ansteuerung wenigstens eines Führerhausstellglieds ist beispielsweise aus der DE 10 2005 012 673 A1 bekannt, wobei die dort beschriebene Niveauregulierung des Führerhauses gegenüber dem Fahrzeugrahmen einem Niveauausgleich bei stillstehendem Fahrzeug oder einem Ausgleich von unterschiedlichen Beladungszuständen des Führerhauses oder einem Wank- und/oder Nickausgleich während der Fahrt dient. Durch die Niveauregulierung soll in allen Fällen erreicht werden, dass das Führerhaus im Stillstand oder während der Fahrt stets auf einem waagerechten, horizontalen und gleich bleibenden Niveau gehalten wird.

Ebenso beschreibt die DE 26 32 444 A1 ein Nutzfahrzeug mit einer Führerhaushöhenregulierung, bei welcher das Führerhaus gegenüber dem Fahrzeugrahmen um eine horizontale Achse schwenkbar und am Fahrzeugrahmen zusätzlich über zwei pneumatische Stellglieder abgestützt ist. Über ein Höhenregulierventil wird die Winkellage des Führerhauses konstant gehalten, wobei bei Lasterhöhung beispielsweise durch einsteigende Fahrgäste der Luftdruck in den Stellgliedern erhöht wird, um ein Absinken des hinteren Endes des Führerhauses zu verhindern. Demgegenüber wird der Luftdruck in den Stellgliedern gesenkt, wenn die Last im Führerhaus sinkt, um zu verhindern, dass sich das hintere Ende des Führerhauses anhebt. Auch hier wird daher die Lage des Führerhauses auf ein horizontales Niveau eingeregelt.

Die Stellglieder oder Tragelemente beinhalten meist Luftfedern, die das Führerhaus relativ zum Fahrzeugrahmen elastisch abstützen, sowie meist hydraulische Dämpfer, um stabilisierende Dämpfungskräfte zwischen dem Führerhaus und dem Fahrzeugrahmen zu erzeugen, was im Hinblick auf durch die Elastizität der Führerhauslagerung hervorgerufene unerwünschte Nick- und Wankbewegungen des Führerhauses notwendig ist.

Die DE 100 38 362 A1 offenbart ein Nutzfahrzeug mit einem Hebemechanismus zum Anheben der Fahrerkabine bei Gefahr eines Aufpralls auf ein vorausfahrendes Fahrzeug derart, dass eine eventuell hinter der Fahrerkabine angeordnete und aus ihrer ursprünglichen Lagerposition fliehkraftbedingt nach vorne bewegte Ladung sich unter der Fahrerkabine hindurch bewegen kann. Hierzu ist die Fahrerkabine an zwei am Rahmen befestigten Säulen vertikal beweglich angebracht und wird durch einen pneumatisch betätigten Scherenheber nach oben bewegt, wobei ein Auslösesystem wie bei Airbags verwendet wird. Nachteilig ist hier zum einen, dass die Fahrerkabine durch den Hebemechanismus auf eine relativ große Höhe gebracht werden muss, damit die Ladung unter ihr hindurch bewegt werden kann. In der Schrift ist von ca. 2,80m die Rede. Weiterhin kann nicht ausgeschlossen werden, dass die nach vorne drängende Ladung die beiden Säulen beschädigt bzw. durchtrennt und die Kabine dann aus relativ großer Höhe abstürzt.

Gemäß der in Bezug zu Patentanspruch 1 gattungsbildenden DE 199 09 432 A1 wird eine Fahrerkabine mittels einer Niveausteuerungsvorrichtung, die eine mit einer Unfallsensorik verbundene Steuereinheit aufweist, bei Erfassung einer bevorstehenden Frontalkollision wenigstens in einem Abstand zum befahrenen Untergrund positioniert, der dem Abstand unter normalen Fahrbedingungen entspricht. Die Niveausteuerungsvorrichtung weist hydraulische Linearstellglieder als Hubmittel auf, die den Frontbereich bei Erfassung einer bevorstehenden Frontalkollision anheben.

Gemäß der in Bezug zum nebengeordneten Patentanspruch 6 gattungsbildenden US 6 224 131 B1 wird eine Vorrichtung offenbart, mit der ein Fahrersitz vor oder während einer drohenden, von einer Sensoreinrichtung detektierten Kollision mittels einer vorgespannten Feder, einer Treibgasladung oder mittels eines gezündeten Festtreibstoffs in einen größeren Abstand in Bezug zu einem Armaturenbrett gebracht wird.

Der nächstliegende Stand der Technik ist in der DE 19909432 A1 zu sehen.

### Aufgabe der Erfindung

Die Aufgabe der Erfindung besteht demgegenüber darin, ein Nutzfahrzeug mit Vorrichtungen der eingangs erwähnten Art derart weiter zu bilden, dass diese Vorrichtungen einfacher und kostengünstiger realisiert werden können.

Diese Aufgabe wird gemäß der Erfindung durch die Merkmale der nebengeordneten Patentansprüche 1 und 6 gelöst.

### Offenbarung der Erfindung

Die Erfindung gemäß dem nebengeordneten Patentanspruch 1 betrifft ein Nutzfahrzeug mit einer Vorrichtung zur Ansteuerung wenigstens eines Führerhausstellglieds zum variablen Einstellen der Position eines Führerhauses relativ zum Fahrzeugrahmen, beinhaltend
- eine Sensoreinrichtung, welche Sensorsignale abhängig von einer Relativgeschwindigkeit und/oder von einem Abstand des Nutzfahrzeugs in Bezug auf ein stationäres oder bewegtes Hindernis aussteuert, sowie
- eine elektronische Steuereinrichtung, welche aus den Sensorsignalen ein Gefahrenmaß hinsichtlich eines drohenden Aufpralls auf das Hindernis ermittelt und welche bei einem Überschreiten eines Schwellwerts durch das Gefahrenmaß
- das Führerhausstellglied derart ansteuert, dass sich bereits vor einem drohenden Aufprall gegenüber der oder den zuvor bestehenden Positionen des Führerhauses die Distanz zwischen Personen im Führerhaus und dem Hindernis vergrößert, wobei
- das wenigstens eine Führerhausstellglied druckmittelbetätigt, von einer Niveausteuerung oder Niveauregelung oder von einer Kippeinrichtung des Führerhauses gegenüber dem Fahrzeugrahmen beinhaltet und
- derart ausgeführt ist, dass das Führerhaus in eine gegenüber einer horizontalen Lage in eine bezogen auf die Fahrtrichtung nach hinten verkippte und/oder verschobene Lage stellbar ist, in welcher wenigstens eine vordere, obere Kante des Führerhauses eine in Bezug auf die Fahrtrichtung nach hinten versetzte Position einnimmt.

Diese Aktion tritt bei einem Überschreiten des Schwellwerts durch das Gefahrenmaß und vor dem drohenden Aufprall des Nutzfahrzeugs auf das Hindernis ein, wozu das druckmittelbetätigte Führerhausstellglied von der Steuereinrichtung mit Hilfe wenigstens eines elektromagnetischen Ventils angesteuert wird, welches die Zufuhr bzw. Abfuhr von Druckmittel zu dem wenigstens einen druckmittelbetätigten Stellglied steuert bzw. regelt.

Erfindungsgemäß sind als Führerhausstellglieder pneumatische Zylinder-Kolbentriebe und wenigstens ein von der elektronischen Steuereinrichtung steuerbares elektromagnetisches Ventil vorgesehen, welches die Zufuhr oder Abfuhr von Druckluft zu und von den pneumatischen Zylinder-Kolbentrieben steuert oder regelt. Die elektrisch gesteuerten Stellglieder können in der notwendig kurzen Reaktionszeit agieren.

Das Führerhausstellglied zum variablen Einstellen der Position des Führerhauses beinhaltet wenigstens ein druckmittelbetätigtes Stellglied, durch welches das Führerhaus gegenüber dem Fahrzeugrahmen elastisch-dämpfend gelagert ist.

Damit weist das wenigstens eine Stellglied eine vorteilhafte Doppelfunktion auf, indem es zum einen zur z.B. aus den eingangs genannten Schriften bekannten Niveauregulierung bzw. zum Kippen des Führerhauses eingesetzt wird, um zum einen das Führerhaus auf einem konstanten Niveau und in einer horizontalen Lage zu halten bzw. es zu verkippen und es zum anderen dazu dient, das Führerhaus zu verkippen, um den Abstand des Fahrers bzw. der Fahrgäste zum Hindernis bereits vor dem Aufprall zu vergrößern.

Die mit der Erfindung zu erzielenden Vorteile bestehen darin, dass durch die Positionsveränderung des Führerhauses der um den Fahrer bzw. einen Fahrgast des Nutzfahrzeugs herum erstreckende Raum bzw. die Distanz der im Führerhaus befindlichen Personen zum Hindernis bereits vor einem Aufprall auf das Hindernis vergrößert wird, so dass die Wahrscheinlichkeit sinkt, dass der Fahrer bzw. der Fahrgast bei einem Unfall eingeklemmt bzw. von Teilen des Führerhauses bzw. von dem Hindernis direkt erfasst wird. Ein im Hinblick auf einen Frontalaufprall kritisches Hindernis kann beispielsweise ein einscherendes, vorausfahrendes, entgegen kommendes oder stehendes Fahrzeug oder ein anderes bewegtes oder ruhendes Hindernis wie beispielsweise ein Bauwerk oder ein Baum sein.

Vorausschauend oder präventiv wird daher von der Kombination der Sensoreinrichtung, der Steuereinrichtung und des Führerhausstellglieds als Aktor abhängig von den Signalen der Sensoreinrichtung eine Wahrscheinlichkeit bzw. ein Gefahrenmaß für einen Auf- oder Anprall bzw. eines Zusammenstoßes des Nutzfahrzeugs mit einem Hindernis ermittelt und bei einem Überschreiten eines Schwellwerts durch die Wahrscheinlichkeit bzw. durch das Gefahrenmaß das wenigstens eine Führerhausstellglied im Sinne einer Vergrößerung des Überlebensraumes durch die Steuereinrichtung angesteuert, bevor der Anprall, Aufprall oder Zusammenstoß stattgefunden hat. Damit sinkt das Verletzungsrisiko für den Fahrer bzw. den oder die Fahrgäste, bei einem Frontalaufprall des Nutzfahrzeugs auf ein Hindernis.

Durch in den Unteransprüchen aufgeführte Maßnahmen sind vorteilhafte Weiterbildungen und Verbesserungen der in Patentanspruch 1 angegebenen Erfindung möglich.

Besonders bevorzugt ist das Führerhaus an seinem in Fahrtrichtung vorderen Ende um eine horizontale Kippachse am Fahrzeugrahmen schwenkbar gelagert und an seinem in Fahrtrichtung hinteren Ende durch das wenigstens eine druckmittelbetätigte Führerhausstellglied abgestützt. Dann kann die nach hinten verkippte Lage des Führerhauses auf einfache Weise durch Abfuhr von Druckmittel aus den Führerhausstellgliedern bewerkstelligt werden, wobei das Führerhaus um die Schwenkachse schwenkt.

Alternativ oder zusätzlich kann das wenigstens eine Führerhausstellglied das Führerhaus gegenüber dem Fahrzeugrahmen in Fahrtrichtung entlang einer Führung verschieben, wobei das Führerhaus gegenüber dem Fahrzeugrahmen durch eine von der Steuereinrichtung steuerbare Verriegelungseinrichtung in einer bestimmten Position ver- und entriegelbar ist. Dann werden das wenigstens eine Führerhausstellglied und die Verriegelungseinrichtung bei einem Überschreiten des Schwellwerts durch das Gefahrenmaß und vor dem drohenden Aufprall des Nutzfahrzeugs auf das Hindernis von der Steuereinrichtung derart angesteuert, dass die Verriegelungseinrichtung entriegelt und das Führerhaus durch das wenigstens eine Führerhausstellglied in eine entgegen der Fahrtrichtung nach hinten verschobene Position gebracht wird.

Die Erfindung gemäß dem nebengeordneten Patentanspruch 6 betrifft ein Nutzfahrzeug mit einer Vorrichtung zur Ansteuerung wenigstens eines Sitzstellglieds zum variablen Einstellen der Position wenigstens eines in einem Führerhaus eines Nutzfahrzeugs angeordneten, mit Personen belegbaren Sitzes relativ zum Führerhaus, beinhaltend
- eine Sensoreinrichtung, welche Sensorsignale abhängig von einer Relativgeschwindigkeit und/oder von einem Abstand des Nutzfahrzeugs in Bezug auf ein stationäres oder bewegtes Hindernis aussteuert, sowie
- eine elektronische Steuereinrichtung, welche aus den Sensorsignalen ein Gefahrenmaß hinsichtlich eines drohenden Aufpralls auf das Hindernis ermittelt und welche bei einem Überschreiten eines Schwellwerts durch das Gefahrenmaß
- das wenigstens eine Sitzstellglied derart ansteuert, dass sich bereits vor einem drohenden Aufprall gegenüber der oder den zuvor bestehenden Positionen des Sitzes die Distanz zwischen dem Sitz und dem Hindernis vergrößert.

Erfindungsgemäß beinhalten wenigstens einige von der Steuereinrichtung gesteuerten Stellglieder elektro-magnetisch betätigte Drucksteuer- oder Druckregelventile, welche über einen Zylinder-Kolbentrieb eine Verstellung des Sitzes vornehmen.

Durch die in den Unteransprüchen aufgeführten Maßnahmen sind vorteilhafte Weiterbildungen und Verbesserungen der in Patentanspruch 6 angegebenen Erfindung möglich.

Besonders bevorzugt kann wenigstens ein (Fahrer-) Sitz durch eine lineare Führung gegenüber dem Führerhaus parallel zur Fahrtrichtung linear verschiebbar und durch eine Verriegelungseinrichtung in einer bestimmten Position ver- und entriegelbar sein. Dann werden wenigstens ein Sitzstellglied und die Verriegelungseinrichtung bei einem Überschreiten des Schwellwerts durch das Gefahrenmaß und vor dem drohenden Aufprall des Nutzfahrzeugs auf das Hindernis durch die Steuereinrichtung derart angesteuert, dass die Verriegelungseinrichtung entriegelt und der Sitz in eine entgegen der Fahrtrichtung nach hinten verschobene Position gestellt wird.

Gemäß einer Weiterbildung kann wenigstens ein Airbag bei einem Überschreiten des Schwellwerts durch das Gefahrenmaß und vor dem drohenden Aufprall des Nutzfahrzeugs auf das Hindernis durch die Steuereinrichtung zur Entfaltung gebracht werden, insbesondere ein Fahrer- und/oder ein Beifahrerairbag.

Besonders bevorzugt beinhaltet die Sensoreinrichtung Sensoren einer Einrichtung (Adaptive Cruise Control, ACC) zur Regelung des Abstands und/oder der Relativgeschwindigkeit zu einem vorausfahrenden Fahrzeug. Ein solches bekanntes Geschwindigkeits- und Abstandsregelsystem verwendet beispielsweise Radarsensoren, die den Abstand und die Geschwindigkeit eines einscherenden oder voraus fahrenden, Fahrzeugs bestimmen. Dabei kann ein vom Fahrer eingestellter Abstand mit Hilfe einer entsprechenden Regelalgorithmik konstant eingehalten werden. Die erfindungsgemäße Anordnung nutzt daher die Sensorik von ACC-Systemen als Signalgeber für die Steuereinrichtung der erfindungsgemäßen Anordnung, in welcher ein Algorithmus zur Abschätzung der Kollisionsgefahr implementiert ist.

Alternativ oder zusätzlich kann die Sensoreinrichtung Beschleunigungssensoren zur Messung wenigstens der Fahrzeugverzögerung in Fahrzeuglängsrichtung beinhalten, welche von einem Elektronischen Stabilitätssystem (ESP) des Nutzfahrzeugs umfasst sind. Auch hier ist daher eine vorteilhafte Doppelnutzung der Sensorik gegeben.

Weiterhin kann die Sensoreinrichtung Überwachungssensoren beinhalten, welche den Abstand des Nutzfahrzeugs von Fahrbahnbegrenzungsmarkierungen bestimmen.

Darüber hinaus kann die Steuereinrichtung zusätzlich von anderen Steuereinrichtungen (Motorsteuergerät, Getriebesteuerung, Bremssteuergerät, GPS etc.) erzeugte Daten wie die Fahrzeuggeschwindigkeit, den Beladungszustand, den momentanen Bremsdruck, das momentane Drehmoment der Antriebsmaschine, und/oder den momentanen Standort des Nutzfahrzeugs zur Ansteuerung des wenigstens eines Stellglieds auswerten.

Genaueres geht aus der nachfolgenden Beschreibung von Ausführungsbeispielen hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Seitenansicht eines Nutzfahrzeugs mit einer Anordnung gemäß einer bevorzugten Ausführungsform der Erfindung;
- Fig.2: eine schematischen Schaltplan der Anordnung von Fig.1;
- Fig.3: eine schematische Seitenansicht eines Führerhauses mit einer Anordnung gemäß einer weiteren Ausführungsform der Erfindung.

### Beschreibung des Ausführungsbeispiels

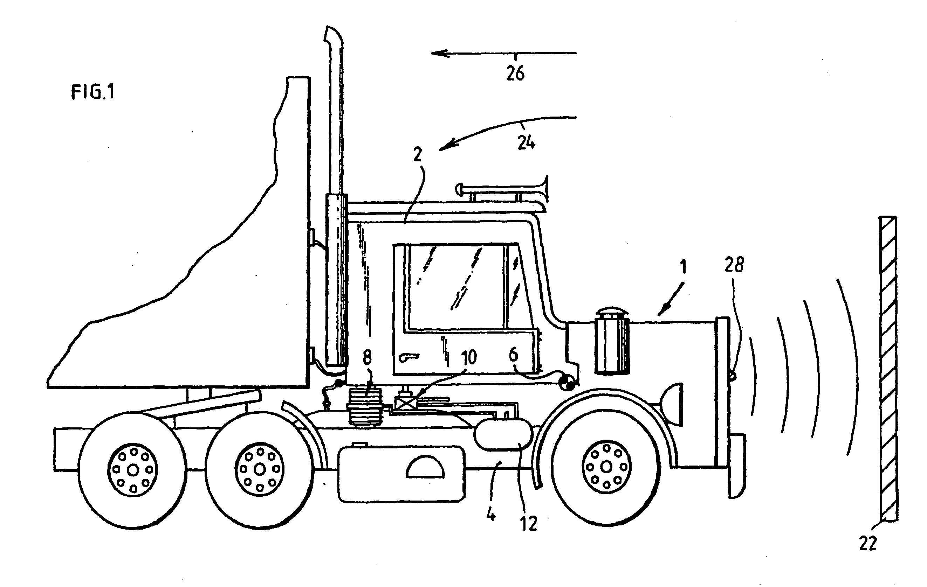

Die in Fig.1 gezeigte Sattelzugmaschine 1 einer Zugfahrzeug-Auflieger-Kombination weist eine Führerhaushöhenregulierung auf, bei welcher ein Führerhaus 2 gegenüber dem Fahrzeugrahmen 4 um eine horizontale, vorzugsweise am vorderen Ende des Führerhauses 2 und quer zur Längsrichtung angeordnete Achse 6 schwenkbar und am Fahrzeugrahmen 4 zusätzlich über beispielsweise zwei, vorzugsweise pneumatische und längsverstellbare Stellglieder 8 z.B. in Form von pneumatischen Zylinder-Kolbentrieben abgestützt ist. Durch die pneumatischen Stellglieder 8 in Kombination mit hier nicht gezeigten beispielsweise hydraulischen Dämpfern ist das Führerhaus 2 gegenüber dem Fahrzeugrahmen 4 auch elastisch-dämpfend gelagert.

Über ein Höhenregulierventil 10 wird die Winkellage des Führerhauses 2 gegenüber dem Fahrzeugrahmen 4 konstant gehalten, wobei bei Lasterhöhung beispielsweise durch in das Führerhaus 2 einsteigende Fahrgäste der Luftdruck in den pneumatischen Stellgliedern 8 über das Höhenregulierventil 10 erhöht wird, um die Stellglieder 8 mit Druckluft aus einem Bord-Druckluftvorrat 12 zu versorgen und dadurch ein Absinken des hinteren Endes des Führerhauses 2 zu verhindern. Demgegenüber wird der Luftdruck in den Stellgliedern 8 durch Entlüften gesenkt, wenn die Last im Führerhaus 2 sinkt, um zu verhindern, dass sich das hintere Ende des Führerhauses 2 anhebt. Dadurch wird die Lage des Führerhauses 2 auf ein horizontales Niveau eingeregelt. Anstatt durch ein Höhenregulierventil 10 kann die Regelung auch durch einen elektrischen Höhensensor, beispielsweise durch ein Potentiometer erfolgen, welches abhängig von der Höhenlage des Führerhauses 2 ein elektrisches Signal an eine elektronische Steuereinrichtung aussteuert, welche in Abhängigkeit des Sensorsignals einen Steller, z.B. in Form eines elektromagnetischen Ventils ansteuert, um den Luftdruck in den Stellgliedern zu steigern bzw. zu senken.

Das Nutzfahrzeug beinhaltet außerdem eine Vorrichtung zur Ansteuerung
a) der beiden pneumatischen Führerhaus-Stellglieder 8 zum variablen Einstellen der Position des Führerhauses 2 relativ zum Fahrzeugrahmen 4, und/oder
b) wenigstens eines Sitzstellglieds 14 zum variablen Einstellen der Position wenigstens eines in dem Führerhaus angeordneten, mit Personen belegbaren Sitzes relativ zum Führerhaus 2, und/oder
c) wenigstens eines Lenksäulenstellglieds 16 zum variablen Einstellen einer in dem Führerhaus 2 angeordneten Lenksäule relativ zum Führerhaus 2, beinhaltend
d) eine Sensoreinrichtung 18, welche Sensorsignale abhängig von einer Relativgeschwindigkeit und/oder von einem Abstand des Nutzfahrzeugs in Bezug auf ein stationäres oder bewegtes Hindernis 22 aussteuert, sowie
e) eine Steuereinrichtung 20, welche aus den Sensorsignalen ein Gefahrenmaß hinsichtlich eines drohenden Aufpralls auf das Hindernis 22 ermittelt und welche bei einem Überschreiten eines Schwellwerts durch das Gefahrenmaß
f) das Führerhausstellglied 8 und/oder das Sitzstellglied 14 und/oder das Lenksäulenstellglied 16 durch die Steuereinrichtung 20 derart ansteuert, dass sich bereits vor einem drohenden Aufprall gegenüber der oder den zuvor bestehenden Positionen des Führerhauses 2 und/oder des Sitzes und/oder der Lenksäule
g) die Distanz zwischen Personen im Führerhaus 2 und dem Hindernis 22, und/oder
h) die Distanz zwischen dem Sitz und dem Hindernis 22, und/oder
i) die Distanz zwischen einem dem Fahrer zugewandten Ende der Lenksäule und dem Fahrer vergrößert.

Der vorgegebene Schwellwert für das Gefahrenmaß kann beispielsweise durch Versuche ermittelt werden. Einen Einfluss auf die Größe des Gefahrenmaßes nehmen dabei Erfahrungs- oder Versuchswerte für die Längsverzögerung des Nutzfahrzeugs 1, den Abstand und/oder die Relativgeschwindigkeit in Bezug zu dem Hindernis 22 sowie weitere Eingangssignale von Sensoren. Die Steuereinrichtung 20 beinhaltet Routinen, welche das Gefahrenmaß in Abhängigkeit der Sensorsignale der Sensoreinrichtung 18 berechnet bzw. abschätzt.

Besonders bevorzugt sind Führerhausstellglieder zum variablen Einstellen der Position des Führerhauses 2 in Form von zwei pneumatischen Stellgliedern 8 der bereits vorhandenen Niveauregulierung des Führerhauses 2 vorhanden. Insbesondere sind diese pneumatischen Stellglieder 8 derart ausgeführt, dass das Führerhaus 2 durch diese Stellglieder 8 in eine gegenüber einer in Fig.1 gezeigten horizontalen Lage in eine bezogen auf die Fahrtrichtung nach hinten verkippte Lage stellbar ist, in welcher eine vordere, obere Kante des Führerhauses eine in Bezug auf die Fahrtrichtung nach hinten versetzte Position einnimmt, wie durch den Pfeil 24 in Fig.1 leicht vorstellbar ist. Die pneumatischen Stellglieder 8 sind in der nach hinten verschobenen bzw. verkippten Lage des Führerhauses 2 daher gegenüber der Situation in Fig.1 verkürzt. Das Fahrerhaus 2 wird dabei um die Achse 6 verschwenkt.

Das Verkippen des Führerhauses 2 um die Achse 6 tritt bei einem Überschreiten des Schwellwerts durch das Gefahrenmaß und vor dem drohenden Aufprall des Nutzfahrzeugs 1 auf das Hindernis 22 ein, wozu die pneumatischen Stellglieder 8 von der Steuereinrichtung 20 angesteuert werden, beispielsweise von wenigstens einem hier nicht gezeigten elektromagnetischen Ventil, welches die Zufuhr bzw. Abfuhr von Druckluft zu und von den pneumatischen Stellgliedern 8 steuert bzw. regelt. Durch das Verkippen des Führerhauses 2, wird, da die Achse 6 in der Regel unterhalb der im Führerhaus 2 befindlichen Personen angeordnet ist und daher ein vertikaler und/oder horizontaler Abstand zwischen den Sitzen im Führerhaus und der Achse 6 vorhanden ist, bedingt durch den dann vorhandenen Hebelarm zwischen den Personen im Führerhaus 2 und der Achse 6 der Abstand zumindest zwischen dem Kopfbereich der Personen und dem Hindernis 22 vergrößert, wie anhand von Fig.1 leicht vorstellbar ist.

Anstatt um eine Achse 6 könnte das Führerhaus 2 auch in seinem vorderen Bereich über weitere druckmittelbetätigte Stellglieder am Fahrzeugrahmen 4 abgestützt sein, welche dann das Verkippen nach hinten durch Verlängerung unterstützen könnten.

Alternativ oder zusätzlich kann wenigstens ein hier nicht gezeigtes Führerhausstellglied vorhanden sein, durch welches das Führerhaus 2 gegenüber dem Fahrzeugrahmen 4 parallel zur Fahrtrichtung entlang einer nicht gezeigten Führung linear verschieben, wobei das Führerhaus 2 gegenüber dem Fahrzeugrahmen 4 durch eine von der Steuereinrichtung 20 steuerbare Verriegelungseinrichtung in einer bestimmten Position ver- und entriegelbar ist. Dann werden das wenigstens eine Führerhausstellglied und die Verriegelungseinrichtung bei einem Überschreiten des Schwellwerts durch das Gefahrenmaß und vor dem drohenden Aufprall des Nutzfahrzeugs 1 auf das Hindernis 22 von der Steuereinrichtung 20 derart angesteuert, dass die Verriegelungseinrichtung entriegelt und das Führerhaus 2 durch das wenigstens eine Führerhausstellglied in eine entgegen der Fahrtrichtung nach hinten verschobene Position gebracht wird, wie durch den weiteren Pfeil 26 in Fig.1 angedeutet ist.

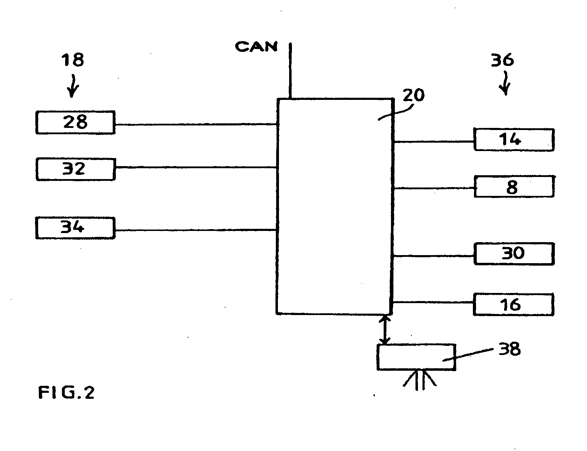

Wie insbesondere in Fig.2 schematisch angedeutet ist, kann alternativ oder zusätzlich der wenigstens ein (Fahrer-) Sitz durch eine lineare Führung gegenüber dem Führerhaus 2 parallel zur Fahrtrichtung linear verschiebbar und durch eine Verriegelungseinrichtung in einer bestimmten Position ver- und entriegelbar sein. Dann werden das wenigstens eine Sitzstellglied 14 und die Verriegelungseinrichtung bei einem Überschreiten des Schwellwerts durch das Gefahrenmaß und vor dem drohenden Aufprall des Nutzfahrzeugs1 auf das Hindernis 22 durch die Steuereinrichtung 20 derart angesteuert, dass die Verriegelungseinrichtung entriegelt und der Sitz in eine entgegen der Fahrtrichtung nach hinten verschobene Position gestellt wird.

Alternativ oder zusätzlich ist die Lenksäule des Nutzfahrzeugs teleskopartig in eine nach unten zurückgezogene Position einziehbar bzw. in eine nach oben ausgezogene Position ausziehbar und/oder um eine Drehachse oder einen Drehpunkt schwenkbar ausgebildet. Insbesondere ist die Lenksäule durch das wenigstens eine Lenksäulenstellglied 16 in eine eingezogene Position und/oder in eine gegenüber dem Fahrer in Fahrtrichtung nach vorne verschwenkte Position einstellbar und durch eine in dieser Position Verriegelungseinrichtung verund entriegelbar. Dann werden wenigstens eine Lenksäulenstellglied 16 und die Verriegelungseinrichtung bei einem Überschreiten des Schwellwerts durch das Gefahrenmaß und vor dem drohenden Aufprall des Nutzfahrzeugs 1 auf das Hindernis 22 durch die Steuereinrichtung 20 derart angesteuert werden, dass die Verriegelungseinrichtung entriegelt und die Lenksäule in eine eingezogene Position und/oder in eine gegenüber dem Fahrer in Fahrtrichtung nach vorne verschwenkte Position eingestellt wird.

Zusätzlich kann wenigstens ein Airbag 30 bei einem Überschreiten des Schwellwerts durch das Gefahrenmaß und vor dem drohenden Aufprall des Nutzfahrzeugs 1 auf das Hindernis 22 durch die Steuereinrichtung 20 zur Entfaltung gebracht werden, insbesondere ein Fahrer- und/oder ein Beifahrerairbag.

Besonders bevorzugt beinhaltet die Sensoreinrichtung 18 Sensoren einer Einrichtung (Adaptive Cruise Control, ACC) zur Regelung des Abstands und/oder der Relativgeschwindigkeit zu einem vorausfahrenden Fahrzeug. Ein solches bekanntes Geschwindigkeits- und Abstandsregelsystem ACC verwendet beispielsweise Radarsensoren 28, die den Abstand und die Geschwindigkeit eines einscherenden oder voraus fahrenden, Fahrzeugs bestimmen. Dabei kann ein vom Fahrer eingestellter Abstand mit Hilfe einer entsprechenden Regelalgorithmik konstant eingehalten werden. Die erfindungsgemäße Anordnung nutzt daher bevorzugt die bei ACC-Systemen vorhandene Sensorik 28 als Signalgeber für die Steuereinrichtung 20 der erfindungsgemäßen Anordnung, in welcher ein Algorithmus zur Abschätzung der Kollisionsgefahr implementiert ist.

Alternativ oder zusätzlich kann die Sensoreinrichtung 18 Beschleunigungssensoren 32 zur Messung wenigstens der Fahrzeugverzögerung in Fahrzeuglängsrichtung beinhalten, welche von einem Elektronischen Stabilitätssystem (ESP) des Nutzfahrzeugs umfasst sind. Auch hier ist daher ein vorteilhafte Doppelnutzung der Sensorik gegeben.

Alternativ oder zusätzlich kann die Sensoreinrichtung Lane-Distance-Warning-(LDW)-Überwachungssensoren 34 beinhalten, welche den Abstand des Nutzfahrzeugs 1 von Fahrbahnbegrenzungsmarkierungen bestimmen.

Darüber hinaus kann die Steuereinrichtung 20 zusätzlich von anderen Steuereinrichtungen (Motorsteuergerät, Getriebesteuerung, Bremssteuergerät, GPS etc.) erzeugte Daten wie die Fahrzeuggeschwindigkeit, den Beladungszustand, den momentanen Bremsdruck, das momentane Drehmoment der Antriebsmaschine, die momentan eingelegte Gangstufe, den Status der Kupplung (offen/geschlossen) und/oder den momentanen Standort des Nutzfahrzeugs (z.B. über GPS) zur Ansteuerung des wenigstens eines Stellglieds 8, 14, 16, 30 auswerten. Diese Daten oder Signale werden der Steuereinrichtung 20 bevorzugt über einen Fahrzeugdatenbus (CAN) übermittelt, wie Fig.2 zeigt.

Die Kommunikation der Sensoren 18 bzw. der Stellglieder 36 mit der elektronischen Steuereinrichtung 20 bzw. die Kommunikation dieser Steuereinrichtung 20 mit Steuergeräten anderer Fahrzeugssysteme wie beispielsweise der Motorsteuerung, der Bremssteuerung oder der Getriebesteuerung und/oder mit weiteren Sensoren erfolgt bevorzugt durch den Fahrzeug-CAN.

Zusätzlich kann die Steuereinrichtung 20 mit einer GSM-Einrichtung 36 in Form eines GSM-Steuergeräts, eines GSM-Sensors und einer GSM-Sendeinrichtung zusammenwirken, zur automatischen Benachrichtigung von Behörden wie Polizei oder Feuerwehr über einen Unfall für den Fall, dass die Steuereinrichtung 20 aus den Sensorsignalen ein Gefahrenmaß hinsichtlich eines drohenden Aufpralls auf das Hindernis 22 ermittelt, welches einen vorgegebenen Schwellwert überschreitet.

Bei dem Hindernis 22 kann es sich um ein stehendes Hindernis 22 handeln, wie in Fig.1 angedeutet ist, oder um ein fahrendes Hindernis, wie ein mit geringerer Geschwindigkeit vorausfahrendes, entgegen kommendes oder einscherendes Fahrzeug.

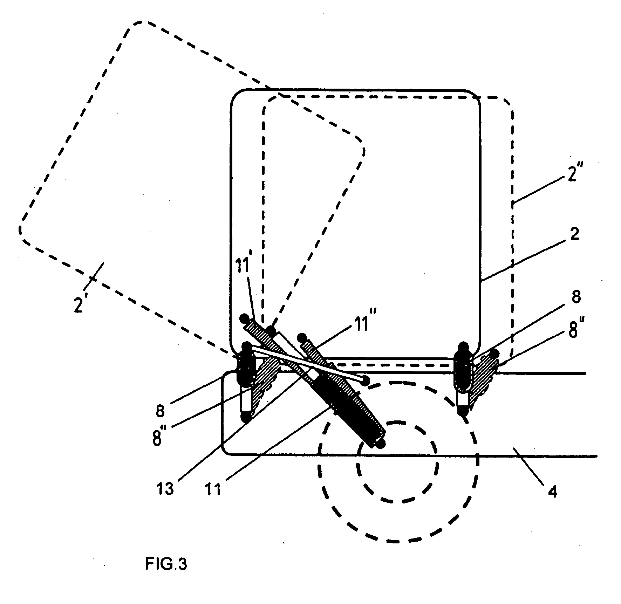

Bei dem in Fig.3 gezeigten weiteren Ausführungsbeispiel ist das Führerhaus 2 durch kombinierte Luftfederbalg-Dämpfungselemente 8, beispielsweise wiederum in Form von pneumatischen Zylinder-Kolbentrieben am Fahrzeugrahmen gelagert, im Rahmen einer Niveauregulierung des Führerhauses 2. Diese Luftfederbalg-Dämpfungselemente 8 sind bevorzugt jeweils endseitig einerseits am Fahrzeugrahmen 4 und andererseits am Führerhaus 2 gelenkig gelagert.

Andererseits ist zum horizontalen Verschieben und Kippen des Führerhauses 2 gegenüber dem Fahrzeugrahmen 4 wenigstens ein beispielsweise doppelt (in Zug- und Druckrichtung) wirkender Hydraulikzylinder 11 als Stellglied vorgesehen, der einerseits am Führerhaus 2 und andererseits am Fahrzeugrahmen 4 gelenkig abgestützt ist. Beispielsweise ist je Fahrerhausseite jeweils ein solcher Hydraulikzylinder 11 vorhanden. Die Anlenkung der Hydraulikzylinder 11 am Führerhaus 2 erfolgt in Bezug zur Anlenkung der vorderen Luftfederbalg-Dämpfungselemente 8 exzentrisch, d.h. mit horizontalem Abstand.

Weiterhin ist ein Führungsgestänge 13 für das Führerhaus 2 vorgesehen, welches einerseits jeweils an einem Anlenkpunkt eines vorderen Luftfederbalg-Dämpfungselements 8 am Führerhaus- 2 und andererseits in Schrägstellung am Fahrzeugrahmen 4 angelenkt ist. Die Länge des Führungsgestänges 13 ist verstellbar und in den eingestellten Positionen verriegelbar, wobei es während des Kippens des Führerhauses 2 in eine vordere Position 2', beispielsweise zu Wartungszwecken der am Fahrzeugrahmen 4 unter dem Führerhaus 2 angeordneten Antriebsmaschine auf eine feste Länge eingestellt und verriegelt ist.

Zum Kippen des Führerhauses 2 in die vordere Position 2' wirken dann die Hydraulikzylinder 11 in ihrer Druckstufe und längen sich in die Position 11', wobei das gegenüber den hinteren Luftfederbalg-Dämpfungselementen 8 entriegelte Führerhaus 2 um die Anlenkpunkte der vorderen Luftfederbalg-Dämpfungselemente 8 in die Position 2' schwenkt, wie Fig.3 zeigt. Das auf eine bestimmte Länge eingestellte und verriegelte Führungsgestänge 13 hält dann diese vorderen, jeweils Schwenklager bildenden Luftfederbalg-Dämpfungselemente 8 in Position.

Bei diesem Ausführungsbeispiel werden als Führerhausstellglieder die Hydraulikzylinder 11 bei einem Überschreiten des Schwellwerts durch das Gefahrenmaß und vor dem drohenden Aufprall des Nutzfahrzeugs 1 auf das Hindernis 22 von der Steuereinrichtung 20 derart angesteuert, dass das Führerhaus 2 durch die Hydraulikzylinder 11 in eine entgegen der Fahrtrichtung nach hinten verschobene Position 2" gebracht wird, wie in Fig.3 angedeutet ist. Diese Verschiebung des Führerhauses 2 in die Position 2" kommt durch eine Verkürzung der Hydraulikzylinder 11 zustande, d.h. die dann verkürzten Hydraulikzylinder 11" arbeiten in Zugrichtung. Ebenfalls verkürzt sich das dann von der Steuereinrichtung 20 entriegelte Führungsgestänge 13.

Die Luftfederbalg-Dämpfungselemente 8 tragen zu dieser horizontalen Verschiebung nicht bei und verschwenken dabei nur parallelogrammartig um ihre Anlenkpunkte am Fahrzeugrahmen 4 nach hinten in die Position 8".

### Bezugszahlentabelle

- 1: Sattelzugmaschine
- 2: Führerhaus
- 3: Führerhaus in horizontal verstellter Position
- 4: Fahrzeugrahmen
- 6: Achse
- 8: Stellglieder (Luftfederbalg, Dämpfer)
- 10: Höhenregulierventil
- 11: Dopppelt wirkender Hydraulikzylinder
- 12: Druckluftvorrat
- 13: Führungsgestänge mit veränderlicher Länge
- 14: Sitzstellglied
- 16: Lenksäulenstellglied
- 18: Sensoreinrichtung
- 20: Steuereinrichtung
- 22: Hindernis
- 24: Pfeil
- 26: Pfeil
- 28: Radarsensoren
- 30: Airbag
- 32: Beschleunigungssensoren
- 34: LDW-Sensoren
- 35: Stellglieder
- 36: GSM-Einrichtung

## Patentansprüche

1. Nutzfahrzeug (1) mit einer Vorrichtung zur Ansteuerung wenigstens eines Führerhausstellglieds (8) zum variablen Einstellen der Position eines Führerhauses (2) relativ zum Fahrzeugrahmen (4), beinhaltend
a) eine Sensoreinrichtung (18), welche Sensorsignale abhängig von einer Relativgeschwindigkeit und/oder von einem Abstand des Nutzfahrzeugs (1) in Bezug auf ein stationäres oder bewegtes Hindernis (22) aussteuert, sowie
b) eine elektronische Steuereinrichtung (20), welche aus den Sensorsignalen ein Gefahrenmaß hinsichtlich eines drohenden Aufpralls auf das Hindernis (22) ermittelt und welche bei einem Überschreiten eines Schwellwerts durch das Gefahrenmaß
c) das wenigstens eine Führerhausstellglied (8) derart ansteuert, dass sich bereits vor einem drohenden Aufprall gegenüber der oder den zuvor bestehenden Positionen des Führerhauses (2) die Distanz zwischen Personen im Führerhaus (2) und dem Hindernis (22) vergrößert, wobei
d) das wenigstens eine Führerhausstellglied (8) druckmittelbetätigt, von einer Niveausteuerung oder Niveauregelung oder von einer Kippeinrichtung des Führerhauses (2) gegenüber dem Fahrzeugrahmen (4) beinhaltet und
e) derart ausgeführt ist, dass das Führerhaus (2) in eine gegenüber einer horizontalen Lage in eine bezogen auf die Fahrtrichtung nach hinten verkippte und/oder verschobene Lage stellbar ist, in welcher wenigstens eine vordere, obere Kante des Führerhauses (2) eine in Bezug auf die Fahrtrichtung nach hinten versetzte Position einnimmt,
**dadurch gekennzeichnet, dass**
f) als Führerhausstellglieder (8) pneumatische Zylinder-Kolbentriebe und wenigstens ein von der elektronischen Steuereinrichtung (20) steuerbares elektromagnetisches Ventil vorgesehen sind, welches die Zufuhr oder Abfuhr von Druckluft zu und von den pneumatischen Zylinder-Kolbentrieben (8) steuert oder regelt.

2. Nutzfahrzeug nach Anspruch 1, **dadurch gekennzeichnet, dass** das wenigstens eine druckmittelbetätigte Führerhausstellglied (8) bei einem Überschreiten des Schwellwerts durch das Gefahrenmaß und vor dem drohenden Aufprall des Nutzfahrzeugs auf das Hindernis von der Steuereinrichtung (20) derart angesteuert wird, dass das Führerhaus (2) in die nach hinten verkippte und/oder verschobene Lage (2") gebracht wird.

3. Nutzfahrzeug nach Anspruch 2, **dadurch gekennzeichnet, dass** das Führerhaus (2) an seinem in Fahrtrichtung vorderen Ende um eine horizontale Kippachse (6) am Fahrzeugrahmen (4) schwenkbar gelagert und an seinem in Fahrtrichtung hinteren Ende durch das wenigstens eine druckmittelbetätigte Führerhausstellglied (8) vertikal abgestützt ist.

4. Nutzfahrzeug nach Anspruch 1, **dadurch gekennzeichnet, dass** das Führerhaus (2) durch das wenigstens eine Führerhausstellglied (11) gegenüber dem Fahrzeugrahmen (4) in Fahrtrichtung entlang einer Führung verschieb- oder verschwenkbar und gegenüber Fahrzeugrahmen (4) durch eine von der Steuereinrichtung (20) steuerbare Verriegelungseinrichtung (13) in einer bestimmten Position ver- und entriegelbar ist.

5. Nutzfahrzeug nach Anspruch 4, **dadurch gekennzeichnet, dass** das wenigstens eine Führerhausstellglied (11) und die Verriegelungseinrichtung (13) bei einem Überschreiten des Schwellwerts durch das Gefahrenmaß und vor dem drohenden Aufprall des Nutzfahrzeugs (1) auf das Hindernis (22) von der Steuereinrichtung (20) derart angesteuert werden, dass die Verriegelungseinrichtung (13) entriegelt und das Führerhaus (2) durch das wenigstens eine Führerhausstellglied (11) in eine entgegen der Fahrtrichtung nach hinten verschobene Position gebracht wird.

6. Nutzfahrzeug (1) mit einer Vorrichtung zur Ansteuerung wenigstens eines Sitzstellglieds (14) zum variablen Einstellen der Position wenigstens eines in einem Führerhaus (2) eines Nutzfahrzeugs angeordneten, mit Personen belegbaren Sitzes relativ zum Führerhaus (2), beinhaltend
a) eine Sensoreinrichtung (18), welche Sensorsignale abhängig von einer Relativgeschwindigkeit und/oder von einem Abstand des Nutzfahrzeugs (1) in Bezug auf ein stationäres oder bewegtes Hindernis (22) aussteuert, sowie
b) eine elektronische Steuereinrichtung (20), welche aus den Sensorsignalen ein Gefahrenmaß hinsichtlich eines drohenden Aufpralls auf das Hindernis (22) ermittelt und welche bei einem Überschreiten eines Schwellwerts durch das Gefahrenmaß
c) das wenigstens eine Sitzstellglied (14) derart ansteuert, dass sich bereits vor einem drohenden Aufprall gegenüber der oder den zuvor bestehenden Positionen des Sitzes die Distanz zwischen dem Sitz und dem Hindernis (22) vergrößert,
**dadurch gekennzeichnet, dass**
d) wenigstens einige von der Steuereinrichtung angesteuerten Stellglieder (14) elektro-magnetisch betätigte Drucksteuer- oder Druckregelventile beinhalten, welche über einen Zylinder-Kolbentrieb eine Verstellung des Sitzes vornehmen.

7. Nutzfahrzeug nach Anspruch 6, **dadurch gekennzeichnet, dass** der wenigstens eine Sitz mittels des wenigstens einen Sitzstellglieds (14) entlang einer Führung gegenüber dem Führerhaus (2) parallel zur Fahrtrichtung verschiebbar und durch eine Verriegelungseinrichtung in einer bestimmten Position ver- und entriegelbar ist.

8. Nutzfahrzeug nach Anspruch 7, **dadurch gekennzeichnet, dass** das wenigstens eine Sitzstellglied (14) und die Verriegelungseinrichtung bei einem Überschreiten des Schwellwerts durch das Gefahrenmaß und vor dem drohenden Aufprall des Nutzfahrzeugs (1) auf das Hindernis (22) durch die Steuereinrichtung (20) derart angesteuert werden, dass die Verriegelungseinrichtung entriegelt und der Sitz in eine entgegen der Fahrtrichtung nach hinten verschobene Position gestellt wird.

9. Nutzfahrzeug nach einem der vorhergehenden Ansprüche, **dadurch gekennzeichnet, dass** das wenigstens ein Airbag (30) bei einem Überschreiten des Schwellwerts durch das Gefahrenmaß und vor dem drohenden Aufprall des Nutzfahrzeugs (1) auf das Hindernis (22) durch die Steuereinrichtung (20) zur Entfaltung gebracht wird.

10. Nutzfahrzeug nach einem der vorhergehenden Ansprüche, **dadurch gekennzeichnet, dass** die Sensoreinrichtung (18) Sensoren (28) einer Einrichtung (Adaptive Cruise Control, ACC) zur Regelung des Abstands und/oder der Relativgeschwindigkeit zu einem vorausfahrenden Fahrzeug beinhaltet.

11. Nutzfahrzeug nach einem der vorhergehenden Ansprüche, **dadurch gekennzeichnet, dass** die Sensoreinrichtung (18) Beschleunigungssensoren (32) zur Messung wenigstens der Fahrzeugverzögerung in Fahrzeuglängsrichtung beinhaltet, welche von einem Elektronischen Stabilitätssystem (ESP) des Nutzfahrzeugs umfasst sind.

12. Nutzfahrzeug nach einem der vorhergehenden Ansprüche, **dadurch gekennzeichnet, dass** die Sensoreinrichtung Überwachungssensoren (34) beinhaltet, welche den Abstand des Nutzfahrzeugs 1 von Fahrbahnbegrenzungsmarkierungen bestimmen.

13. Nutzfahrzeug nach einem der vorhergehenden Ansprüche, **dadurch gekennzeichnet, dass** die Steuereinrichtung (20) zusätzlich von anderen Steuereinrichtungen erzeugte Daten wie die Fahrzeuggeschwindigkeit, den Beladungszustand, den momentanen Bremsdruck, das momentane Drehmoment der Antriebsmaschine, den Status der Kupplung, den momentan eingelegte Gangstufe und/oder den momentanen Standort des Nutzfahrzeugs zur Ansteuerung wenigstens eines Stellglieds (8, 14, 16, 30) auswertet.

## Claims

1. Commercial vehicle (1) having an apparatus for activating at least one driver's cab actuating element (8) for variable setting of the position of a driver's cab (2) relative to the vehicle frame (4), comprising
a) a sensor device (18) which outputs sensor signals in a controlled manner depending on a relative speed and/or a spacing of the commercial vehicle (1) in relation to a stationary or moving obstacle (22), and
b) an electronic control device (20) which determines a level of risk from the sensor signals with regard to an impending collision with the obstacle (22) and which, if a threshold value is exceeded by the level of risk,
c) activates at least one driver's cab actuating element (8) in such a way that the distance between persons in the driver's cab (2) and the obstacle (22) is already increased before an impending collision in comparison with the previous position or positions of the driver's cab (2),
d) the at least one driver's cab actuating element (8) comprising pressure-medium-actuated by a ride-level controller or ride-level regulator or by a tilting device of the driver's cab (2) with respect to the vehicle frame (4) and
e) being configured in such a way that the driver's cab (2) can be adjusted into a position which, in comparison with a horizontal position, is tilted and/or displaced rearwards in relation to the driving direction, in which position at least one front, upper edge of the driver's cab (2) assumes a position which is offset rearwards in relation to the driving direction,
**characterized in that**
f) pneumatic cylinder/piston drives and at least one electromagnetic valve which can be controlled by the electronic control device (20) are provided as driver's cab actuating elements (8), which electromagnetic valve controls or regulates the inflow or outflow of compressed air to and from the pneumatic cylinder/piston drives (8).

2. Commercial vehicle according to Claim 1, **characterized in that** should the potential risk prior to the imminent impact of the commercial vehicle with the obstacle exceed the threshold value, at least the one hydraulically operated driver's cab actuator element (8) is activated by the control device (20), in such a way that the driver's cab (2) is brought into the rearward tilted and/or backset position (2'').

3. Commercial vehicle according to Claim 2, **characterized in that** at its front end in the direction of travel the driver's cab (2) is supported so that it can pivot about a horizontal tilting axis (6) on the vehicle frame (4) and at its rear end in the direction of travel is vertically supported by at least one hydraulically operated driver's cab actuator element (8).

4. Commercial vehicle according to Claim 1, **characterized in that** the driver's cab (2) can be displaced or pivoted in relation to the vehicle frame (4) along a guide in the direction of travel by at least the one driver's cab actuator element (11), and can be locked in a specific position in relation to the vehicle frame (4) and released therefrom by a locking device (13) that can be controlled by the control device (20).

5. Commercial vehicle according to Claim 4, **characterized in that** should the potential risk prior to the imminent impact of the commercial vehicle (1) with the obstacle (22) exceed the threshold value, at least the one driver's cab actuator element (11) and the locking device (13) can be activated by the control device (20), in such a way that the locking device (13) is released and the driver's cab (2) is brought into a backset position counter to the direction of travel by at least the one driver's cab actuator element (11).

6. Commercial vehicle (1) having an apparatus for activating at least one seat actuating element (14) for variable setting of the position of at least one seat relative to the driver's cab (2), which seat is arranged in a driver's cab (2) of a commercial vehicle and can be occupied by persons, comprising
a) a sensor device (18) which outputs sensor signals in a controlled manner depending on a relative speed and/or a spacing of the commercial vehicle (1) in relation to a stationary or moving obstacle (22), and
b) an electronic control device (20) which determines a level of risk from the sensor signals with regard to an impending collision with the obstacle (22) and which, if a threshold value is exceeded by the level of risk,
c) activates the at least one seat actuating element (14) in such a way that the distance between the seat and the obstacle (22) is already increased before an impending collision in comparison with the previous position or positions of the seat,
**characterized in that**
d) at least some actuating elements (14) which are controlled by the control device comprise electromagnetically actuated pressure control valves or pressure regulating valves which carry out an adjustment of the seat via a cylinder/piston drive.

7. Commercial vehicle according to Claim 6, **characterized in that** at least the one seat can be displaced along a guide in relation to the driver's cab (2) parallel to the direction of travel and can be locked in a specific position and released therefrom by a locking device.

8. Commercial vehicle according to Claim 7, **characterized in that** should the potential risk prior to the imminent impact of the commercial vehicle (1) with the obstacle (22) exceed the threshold value, at least the one seat actuator element (14) and the locking device are activated by the control device (20), in such a way that the locking device is released and the seat is brought into a backset position counter to the direction of travel.

9. Commercial vehicle according to one of the preceding claims, **characterized in that** should the potential risk prior to the imminent impact of the commercial vehicle (1) with the obstacle (22) exceed the threshold value, at least one airbag (30) is made to deploy by the control device (20).

10. Commercial vehicle according to one of the preceding claims, **characterized in that** the sensor device (18) comprises sensors (28) of an adaptive cruise control (ACC) device for controlling the distance from a preceding vehicle and/or the speed relative to the latter.

11. Commercial vehicle according to one of the preceding claims, **characterized in that** the sensor device (18) comprises acceleration sensors (32) incorporated in an electronic stability system (ESP) of the commercial vehicle for measuring at least the vehicle deceleration in the vehicle longitudinal direction.

12. Commercial vehicle according to one of the preceding claims, **characterized in that** the sensor device comprises monitoring sensors (34), which determine the distance of the commercial vehicle (1) from road lane boundary markings.

13. Commercial vehicle according to one of the preceding claims, **characterized in that** the control device (20) also evaluates data generated by other control devices, such as the vehicle speed, the load state, the instantaneous brake pressure, the instantaneous engine torque, the status of the clutch, the gear currently engaged and/or the instantaneous location of the commercial vehicle for the activation of at least one actuator element (8, 14, 16, 30).

## Revendications

1. Véhicule utilitaire (1) muni d'un dispositif de commande d'au moins un seul organe de réglage de l'habitacle de conduite (8) pour le réglage variable de la position d'un habitacle de conduite (2) relativement au cadre de véhicule (4), comprenant
(a) un moyen à détecteurs (18), qui règle des signaux de détecteur en fonction d'une vitesse relative et/ou d'un écart du véhicule utilitaire (1) relativement à un obstacle (22) stationnaire ou en mouvement,
(b) ainsi qu'un moyen de commande électronique (20), qui établit une mesure de danger en vue d'un impact imminent sur ledit obstacle (22), en la dérivant desdits signaux de détecteur, et qui, quand la mesure de danger dépasse une valeur de seuil,
(c) règle ledit au moins seul organe de réglage de l'habitacle de conduite (8) d'une telle manière, que l'écart entre des personnes dans ledit habitacle de conduite (2) et ledit obstacle (22) s'augmente relativement à la position ou les positions données auparavant déjà avant un impact imminent, dans lequel
(d) ledit au moins seul organe de réglage de l'habitacle de conduite (8) est commandé moyennant un milieu sous pression par une unité de commande ou de réglage de niveau ou est contenu dans un moyen de basculement de l'habitacle de conduite (2) relativement audit cadre de véhicule (4),
(e) en étant conçu d'une telle façon, que ledit habitacle de conduite (2) se puisse placer en une position basculée ou déplacée vers l'arrière, vue dans le sens de la marche, relativement à une position horizontale, dans laquelle au moins une arête avant supérieure dudit habitacle de conduite (2) prend une position déportée vers l'arrière relativement à la direction de mouvement,
**caractérisé en ce**
(f) des systèmes d'entraînement aux cylindres et pistons pneumatiques et au moins une vanne électromagnétique commandables par ledit moyen de commande électronique (20) sont prévus en tant que des organes de réglage de l'habitacle de conduite (8), cette vanne commandant ou réglant l'alimentation ou le décharge de l'air comprimé dans ou en dehors desdits systèmes d'entraînement aux cylindres pneumatiques.

2. Véhicule utilitaire selon la revendication 1, **caractérisé en ce que**, quand ladite mesure de danger dépasse ladite valeur de seuil et avant ledit impact imminent du véhicule utilitaire sur ledit obstacle, ledit au moins seul organe de réglage de l'habitacle de conduite (8) commandé par un milieu sous pression est commandé par ledit moyen de commande électronique (20) d'une telle manière, que ledit habitacle de conduite (2) est porté dans ladite position basculée et/ou déplacée en arrière (2").

3. Véhicule utilitaire selon la revendication 2, **caractérisé en ce que** ledit habitacle de conduite (2) est logé audit cadre de véhicule (4) pour un basculement autour d'un axe de basculement horizontal (6) par son extrémité avant dans le sens de la marche, pendant qu'il est appuyé, à son extrémité arrière dans le sens de la marche, en sens vertical par ledit au moins seul organe de réglage de l'habitacle de conduite (8) à commande par un milieu sous pression.

4. Véhicule utilitaire selon la revendication 1, **caractérisé en ce que** ledit habitacle de conduite (2) est déplaçable ou basculable relativement audit cadre de véhicule (4) dans le sens de la marche le long d'un élément de guidage par ledit au moins seul organe de réglage de l'habitacle de conduite (11) et verrouillable et déverrouillable par un moyen de verrouillage (13) sous commande dudit moyen de commande (20) en une position définie.

5. Véhicule utilitaire selon la revendication 4, **caractérisé en ce que**, quand ladite mesure de danger dépasse ladite valeur de seul et avant ledit impact imminent du véhicule utilitaire (1) sur ledit obstacle (22), ledit au moins seul organe de réglage de l'habitacle de conduite (11) et ledit moyen de verrouillage (13) sont commandés par ledit moyen de commande (20) d'une telle manière, que ledit moyen de verrouillage (13) est déverrouillé et ledit habitacle de conduite (2) est porté en une position déplacée vers l'arrière, à l'encontre dudit sens de la marche, par ledit au moins seul organe de réglage de l'habitacle de conduite (11).

6. Véhicule utilitaire (1) muni d'un dispositif de commande d'au moins un seul organe de réglage de siège (14) pour le réglage variable de la position d'une siège disposée dans un habitacle de conduite (2) d'un véhicule utilitaire, pour l'occupation par des personnes, comprenant
(a) un moyen à détecteurs (18), qui règle des signaux de détecteur en fonction d'une vitesse relative et/ou d'un écart du véhicule utilitaire (1) relativement à un obstacle (22) stationnaire ou en mouvement,
(b) ainsi qu'un moyen de commande électronique (20), qui établit une mesure de danger en vue d'un impact imminent sur ledit obstacle (22), en la dérivant desdits signaux de détecteur, et qui, quand la mesure de danger dépasse une valeur de seuil,
(c) règle ledit au moins seul organe de réglage de siège (14) d'une telle manière, que l'écart entre la siège et ledit obstacle (22) s'augmente relativement à la position ou les positions données auparavant déjà avant un impact imminent,
**caractérisé en ce**
(d) **qu'**au moins quelques-uns desdits organes de réglage (14) commandés par ledit moyen de commande comprennent des vannes de commande ou de réglage de pression à opération électromagnétique, qui réalisent une modification de la position de ladite siège via un système d'entraînement à cylindre et piston.

7. Véhicule utilitaire selon la revendication 6, **caractérisé en ce que** ladite au moins seule siège est déplaçable relativement audit habitacle de conduite (2), le long d'une unité de guidage, par ledit au moins seul organe de réglage de siège (14), en parallèle au sens de la marche, en étant verrouillable et déverrouillable en une position définie par un moyen de verrouillage.

8. Véhicule utilitaire selon la revendication 7, **caractérisé en ce que**, quand ladite mesure de danger dépasse ladite valeur de seuil et avant ledit impact imminent du véhicule utilitaire sur ledit obstacle, ledit au moins seul organe de réglage de siège (14) et ledit moyen de verrouillage sont commandés par ledit moyen de commande (20) d'une telle manière, que ledit moyen de verrouillage soit déverrouillé et ladite siège soit placée en une position déplacée vers l'arrière, à l'encontre du sens de la marche.

9. Véhicule utilitaire selon une quelconque des revendications précédentes, **caractérisé en ce qu'**au moins un coussin gonflable (30) est causé par ledit moyen de commande (20) à se déplier quand ladite mesure de danger dépasse ladite valeur de seuil et avant ledit impact imminent du véhicule utilitaire sur ledit obstacle.

10. Véhicule utilitaire selon une quelconque des revendications précédentes, **caractérisé en ce que** ledit moyen à détecteurs (18) comprend des détecteurs (28) d'un moyen à régler l'écart et/ou la vitesse relative relativement à un véhicule qui précède (Adaptive Cruise Control, ACC).

11. Véhicule utilitaire selon une quelconque des revendications précédentes, **caractérisé en ce que** ledit moyen à détecteurs (18) comprend des détecteurs d'accélération (32) à mesurer au moins la décélération du véhicule en direction longitudinale du véhicule, qui sont contenus dans un système électronique de stabilité (ESP) du véhicule utilitaire.

12. Véhicule utilitaire selon une quelconque des revendications précédentes, **caractérisé en ce que** ledit moyen à détecteurs comprend des détecteurs de surveillance (34), qui établissent l'écart entre le véhicule utilitaire (1) et des marques de limite de la voie de roulement.

13. Véhicule utilitaire selon une quelconque des revendications précédentes, **caractérisé en ce que** ledit moyen de commande (20) analyse des données engendrées en plus par des autres moyens de commande, comme la vitesse du véhicule, l'état de chargement, la pression instantanée de freinage, le couple instantané du moteur d'entraînement, l'état de l'embrayage, le rapport de vitesse sélectionné momentanément, et ou l'emplacement du véhicule utilitaire, pour la commande d'au moins un organe de réglage (8, 14, 16, 30).
